(19) Europäisches Patentamt
European Patent Office
Office européen des brevets

(11) **EP 4 772 844 A1**

(12) **EUROPEAN PATENT APPLICATION**

(43) Date of publication:
08.07.2026 Bulletin 2026/28

(21) Application number: 25216793.7

(22) Date of filing: 18.11.2025

(51) International Patent Classification (IPC):
*G01F 1/667* (2022.01)    *G01F 15/00* (2006.01)
*G01F 1/66* (2022.01)

(52) Cooperative Patent Classification (CPC):
G01F 1/668; G01F 1/662; G01F 15/00

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 03.01.2025 US 202519009757

(71) Applicant: Itron, Inc.
Liberty Lake, WA 99019 (US)

(72) Inventors:
• DARRAS, Arnaud
Saint Germain au Mon (FR)
• MEURISSE, Thibaut
Macon (FR)
• JANDAUD, Pierre-Olivier
Macon (FR)

(74) Representative: Morrall, Jonathan Ian McLachlan
et al
Kilburn & Strode LLP
Lacon London
84 Theobalds Road
London WC1X 8NL (GB)

(54) **SINGLE TRANSDUCER ULTRASONIC FLOW METER**

(57)    A single-transducer fluid meter is adapted to measurement the flow of a fluid (e.g., water or natural gas). A transducer sends an ultrasonic signal within a flow pipe through which the fluid flows within the fluid meter. In the example, the ultrasonic signal is reflected twice, thereby traveling in a triangular path that starts and ends at the transducer. A time-of-flight of an ultrasonic acoustic signal is measured. The time-of-flight starts when an electrical signal excites the transducer, and ends when the acoustic signal returns to the transducer. The time-of-flight of the ultrasonic signal can be used (with the speed-of-sound of the fluid) to calculate a flow-rate of the fluid. In a first example, a faster flowrate of the fluid can result in a shorter time-of-flight (e.g., if the ultrasonic signal moves with the fluid flow). A slower flowrate of the fluid can result in a longer time-of-flight.

**EP 4 772 844 A1**

**Description**

BACKGROUND

Fluid meters (e.g., water and natural gas meters operated by a utility company) frequently use "static" technologies to measure a flowrate of the fluid, and from this they obtain a volume or quantity of fluid provided over time. The technology is considered to be static in that no moving parts are present (such as in the case of a mechanical meter that uses a flexible metal bellows to measure fluid flowing through a meter). Instead, an upstream transducer and a downstream transducer (e.g., piezo electric devices) are positioned in a flow pipe within a natural gas or water meter. In operation, the downstream transducer sends a first ultrasonic signal to an upstream transducer, and the upstream transducer sends a second ultrasonic signal to the downstream transducer. If fluid is moving within the flow pipe, the first ultrasonic signal will move more slowly upstream than the second ultrasonic signal moves downstream. This time difference may be used to determine the flowrate, which is revised over time to determine a quantity of the fluid (natural gas or water) that was consumed at a customer's service site.

Such fluid meters have design issues. First, for the time difference to be measurable and useful, there is a minimum distance required between the two transducers. Second, very accurate alignment of the two transducers is required, resulting in manufacturing costs. Third, the cost of the transducers contributes to the cost of the fluid meter.

BRIEF DESCRIPTION OF THE DRAWINGS

The detailed description is described with reference to the accompanying figures. In the figures, the left-most digit(s) of a reference number identifies the figure in which the reference number first appears. The same numbers are used throughout the drawings to reference like features and components. Moreover, the figures are intended to illustrate general concepts, and not to indicate required and/or necessary elements.

FIG. 1 is a block diagram showing a part of a system, wherein a fluid meter is configured according to an example single transducer design.

FIG. 2 is a diagram showing a flow pipe of a flow meter, and showing example flow-shapers that create a faster-flowrate-region and a slower-flowrate-region within the flow pipe.

FIG. 3 is a cross-sectional diagram, taken along the 3-3 lines of FIG. 2, showing an end view of a flow-shaper.

FIG. 4 is a diagram showing example reflectors that reflect the ultrasonic signal of the transducer.

FIG. 5 is a diagram showing an example first path traveled by an ultrasonic signal, wherein a time-of-flight is based at least in part on a speed of fluid flow, and showing an example second path traveled by an ultrasonic signal, wherein a time-of-flight is based at least in part on a speed-of-sound within the fluid.

FIG. 6 is a timing diagram showing an example sequence of voltage patterns generated by a transducer device responsive to the return to the transducer of acoustic signals transiting the first and second paths of FIG. 5.

FIG. 7 is a diagram showing an example path traveled by an ultrasonic signal, wherein a time-of-flight is based at least in part on a speed of fluid flow; and showing use of a thermal sensor to provide output used to calculate a speed-of-sound within the fluid.

FIG. 8 is a flow diagram showing example operation of a fluid meter configured according to an example single transducer design.

FIG. 9 is a flow diagram showing example derivation of a speed-of-sound value, for use in determining a flowrate of fluid in the fluid meter.

FIG. 10 is a flow diagram showing example use of a temperature value, for use in determining a flowrate of fluid in the fluid meter.

FIG. 11 is a flow diagram showing a first example of guidance of an acoustic signal through a flow pipe of a fluid meter.

FIG. 12 is a flow diagram showing a second example of guidance of an acoustic signal through a flow pipe of the fluid meter.

FIG. 13 is a flow diagram showing a third example of guidance of an acoustic signal through a flow pipe of the fluid meter.

FIG. 14 is a flow diagram showing a first example operation of one or more flow-shapers to divert fluid flow within the flow pipe of the fluid meter.

FIG. 15 is a flow diagram showing a second example operation of one or more flow-shapers to divert fluid flow within the flow pipe of the fluid meter.

DETAILED DESCRIPTION

Overview

The disclosure describes a single transducer fluid meter, adapted to the measurement of flow of a fluid, such as water, natural gas, or other fluid. In an example of the single transducer fluid meter, an ultrasonic signal transits a path that includes a segment through which fluid flows. A transducer sends an ultrasonic signal within a flow pipe through which fluid may flow (e.g., depending on customer demand) within the fluid meter. In the example, the ultrasonic signal is reflected twice (e.g., by a first reflector and a second reflector), thereby traveling in a triangular path that starts and ends at the transducer. A time-of-flight of an ultrasonic acoustic signal is measured. The time-of-flight starts when an electrical signal excites the transducer, thereby creating a vibration which creates the ultrasonic signal. The time-of-flight ends when the acoustic signal returns to the transducer, causing the transducer to again vibrate, which causes the transducer to create an electrical signal. The time-of-flight of the ultrasonic signal can be used to calculate a flowrate of the fluid through the flow pipe. In a first example, a faster flowrate of the fluid can result in a shorter time-of-flight (e.g., if the ultrasonic signal moves in the direction of the fluid flow). In a second example, a slower flowrate (or a flowrate of zero) of the fluid can result in a longer time-of-flight.

The calculation of the flowrate of fluid through the flow pipe is also based on the speed-of-sound of the fluid moving through the fluid meter. To determine the speed-of-sound, the ultrasonic signal is reflected-e.g., by a third reflector-and back to the transducer. The time-of-flight of this signal is used to determine the speed-of-sound. Alternatively, a temperature sensor could be used, to obtain the temperature of the fluid. The temperature (and fluid type, e.g., water or natural gas) can be used to determine the speed-of-sound.

## Example System and Techniques

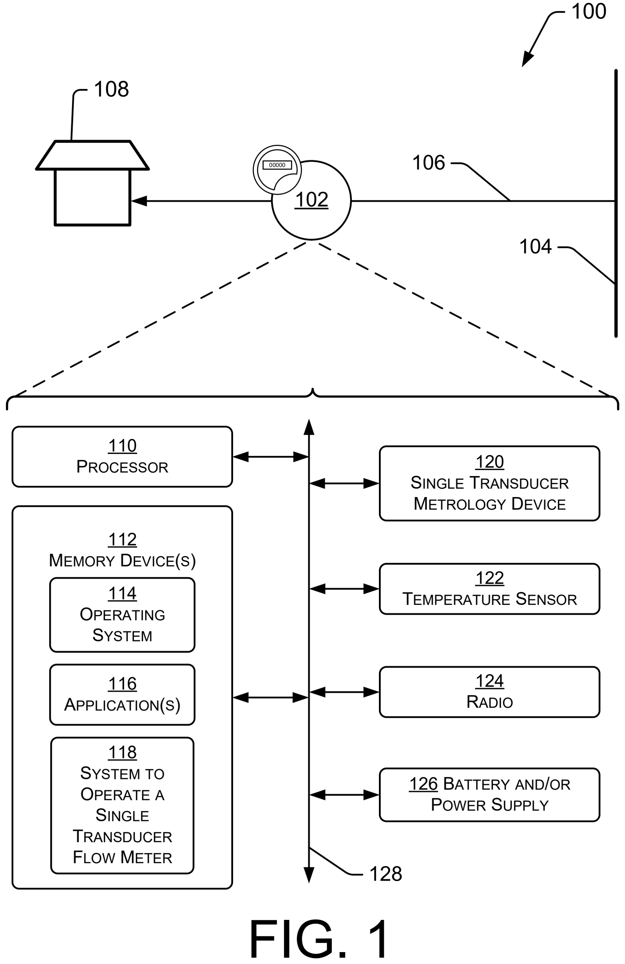

FIG. 1 shows a part of an example system 100, wherein a fluid meter 102 is configured according to an example single transducer design. In the system 100, a fluid main pipe 104 is configured to provide water, natural gas, or other fluid to a smaller service pipe 106. The fluid meter 102 (e.g., a water or gas meter) measures consumption of the fluid, which is provided to the customer 108.

Within the fluid meter 102, a processor 110 is in communication with a memory device 112 over a bus 128. The memory device(s) 112 may include a number of executable software programs, such as an operating system 114 and one or more applications 116. The applications 116 may operate, or assist in the operation of, metrology devices, communications devices, sensors, etc. In an example, a radio 124 can be controlled by an application. A battery 126 (e.g., a battery and/or a regulated power supply) provides power to the processor 110, memory device(s) 112, a single transducer metrology device 120, temperature sensor 122, radio 124 and other electronic devices, if present.

A system 118 may include one or more software apps, computer programs, program subroutines, etc., which collectively are configured to operate a single transducer metrology device 120, and in some implementations, the temperature sensor 122. In an example, the system 118 is configured to operate the single transducer metrology device 120 to determine a flowrate of fluid in a flow pipe of the fluid meter 102, and to thereby determine (over time) a quantity of fluid consumed by the customer.

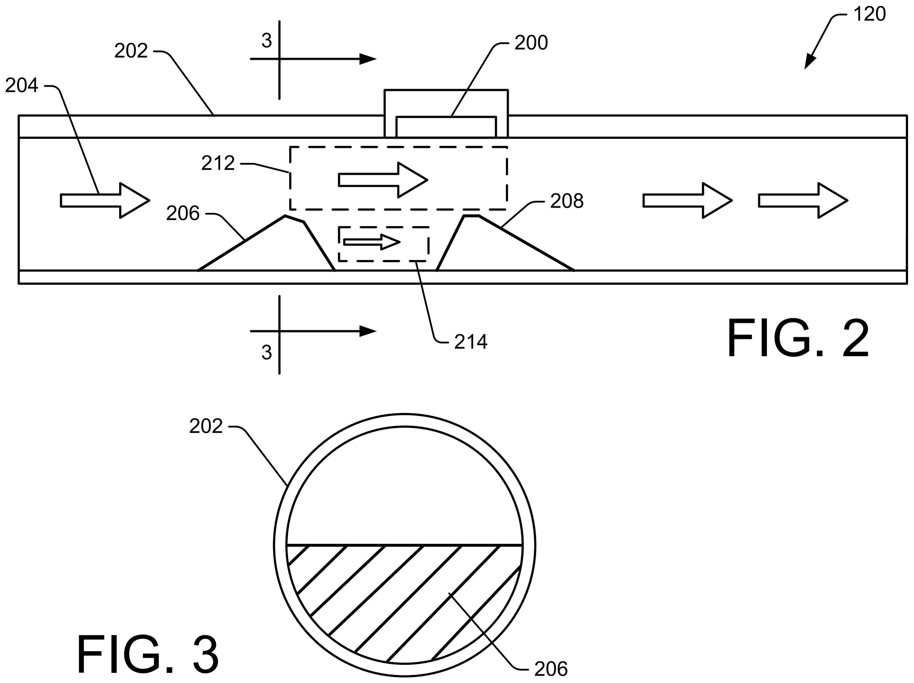

FIG. 2 shows an example single transducer metrology device 120 of a fluid metering device (e.g., the fluid meter 102 of FIG. 1), which includes a single transducer 200. The single transducer metrology device 120 may be controlled by execution and/or operation of the system 118-including one or more software programs-by the processor 110. FIG. 2 also shows example flow-shapers that create a faster-flowrate-region and slower-flowrate-region within the flow pipe.

In the example single transducer metrology device 120, a flow pipe 202 guides a fluid flow 204 past the transducer 200. In the example, an upstream flow-shaper 206 and a downstream flow-shaper 208 create a faster-flowrate-region 212 and a slower-flowrate-region 214. The slower-flowrate-region 214 may include eddies, currents of changing direction, and/or even fluid flow in the reverse direction (i.e., the direction generally opposite of the travel of the fluid flow 204). The difference in the flowrates of the faster-flowrate-region 212 and the slower-flowrate-region 214 results in a different acoustic signal speeds in the different regions. Accordingly, the use of the upstream flow-shaper 206 and the downstream flow-shaper 208, and the faster-flowrate-region 212 and the slower-flowrate-region 214 results a different time-of-flight of an acoustic signal traveling through both regions. Such a time-of-flight is translatable into a fluid flowrate through the pipe 202.

Accordingly, if fluid is moving through the flow pipe 202, fluid will flow faster through the faster-flowrate-region 212 than it will flow through the slower-flowrate-region 214.

Because the upstream flow-shaper 206 and a downstream flow-shaper 208 partially block fluid movement in the downstream and upstream directions, fluid in the slower-flowrate-region 214 may remain in the region for some time. In some situations (based on fluid type, temperature, and the flowrate through the faster-flowrate-region 212), fluid within the slower-flowrate-region 214 may move, but will move more slowly than in the faster-flowrate-region 212.

FIG. 3 shows an end view of the upstream flow-shaper 206, taken along the 3-3 lines of FIG. 2. While the upstream flow-shaper 206 occupies approximately one-half of the cross-sectional area, in other examples a flow-shaper may occupy a greater or lesser amount of the flow pipe 202.

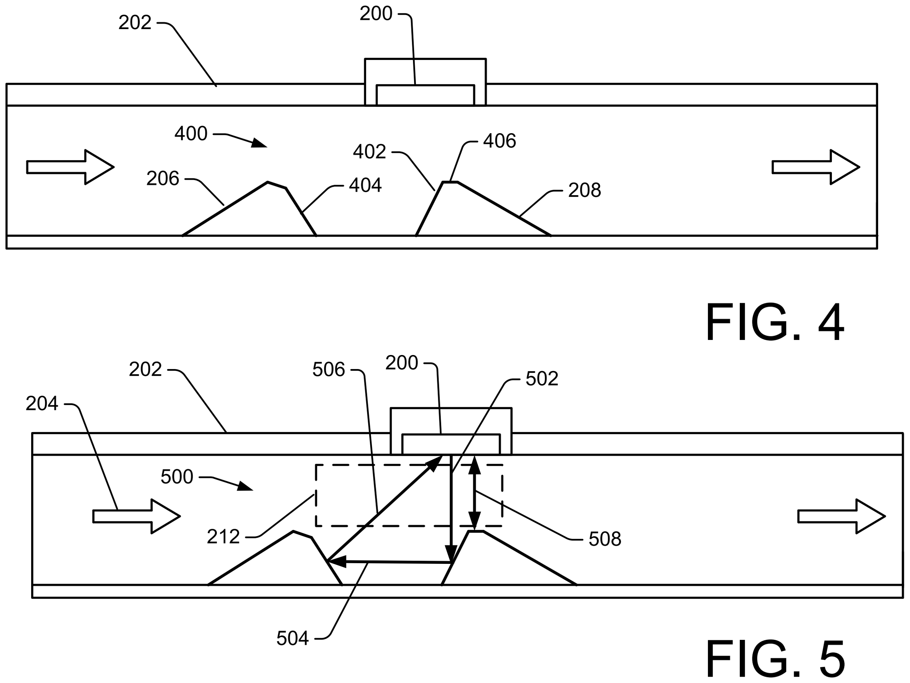

FIG. 4 shows example configuration 400 of reflectors that reflect the ultrasonic signal of the transducer 200. In the example shown, the reflectors are surfaces of the upstream and downstream flow-shapers. In other examples, the reflectors could be independent of the flow-shapers. In the example shown, a first reflector 402 is a surface of the downstream flow-shaper 208. A second reflector 404 is a surface of the upstream flow-shaper 206. A third reflector 406 is an upper surface of the downstream flow-shaper 208. In the example, the third reflector 406 can be parallel to the flow pipe 202. Thus, one or more reflectors (e.g., the first and third reflectors) can be different surfaces of the same component.

FIG. 5 shows an example first path 500 traveled by an ultrasonic signal, generated by the transducer 200, as the signal is reflected by the first reflector 402 and the second reflector 404 (wherein the reflectors are shown and labeled in FIG. 4). A first segment 502 of the first path 500 extends from the transducer 200 to the first reflector 402. A second segment 504 of the first path 500 extends from the first reflector 402 to the second reflector 404. A third segment 506 of the first path 500 extends from the second reflector 404 to the transducer 200. Because the third segment 506 is within the faster-flowrate-region 212, the time-of-flight of an ultrasonic signal traversing the first path 500 is based at least in part on a speed of fluid flow.

FIG. 5 shows an example second path 508 traveled by an ultrasonic signal generated by the transducer 200. The second path 508 includes two overlapping segments, which extend from the transducer 200 to the third reflector 406 (seen in FIG. 4) and back to the transducer. In the example, the time-of-flight of the ultrasonic signal along the second path 508 is based at least in part on a speed-of-sound within the fluid. Because the length of the second path 508 is known, the time-of-flight along the second path can be translated to the speed-of-sound in the fluid.

While FIG. 5 shows acoustic travel in the third segment 506 of path 500 moving generally "with" the flow 204, and the path 500 in a clockwise direction, a mirror image version of the path 500 is possible. In that version, acoustic travel in the third segment 506 would be oriented generally "against" the flow 204, and the path 500 would be in a counterclockwise direction.

Using several values as input, the flowrate of the fluid may be calculated. The flowrate may be used to calculate the quantity of fluid consumed over time. In an example, the inputs include: the speed-of-sound in the fluid; the time-of-flight of the ultrasonic signal to traverse the path 500; and the dimensions of the path 500 as defined by the relative locations of the transducer 200 and the first reflector 402 and the second reflector 404. The time-of-flight is particularly affected by the segment 506, traversing the faster-flowrate-region 212. In an example, faster fluid movement results in a shorter transit time of the segment 506. In an example, the dimensions of the path 500 (as defined by the relative locations of the transducer 200 and the first reflector 402 and the second reflector 404) are a function of the flow meter. The speed-of-sound can be measured (or alternatively derived from the fluid type and the temperature), and used to select a look-up table. The look-up table may have been created experimentally, and translates the time-of-flight of the first path 500 into a flowrate of fluid in the pipe 202. The flowrate (adjusted at intervals over time) can be used to calculate a quantity of fluid consumed.

## Example Timing Diagram

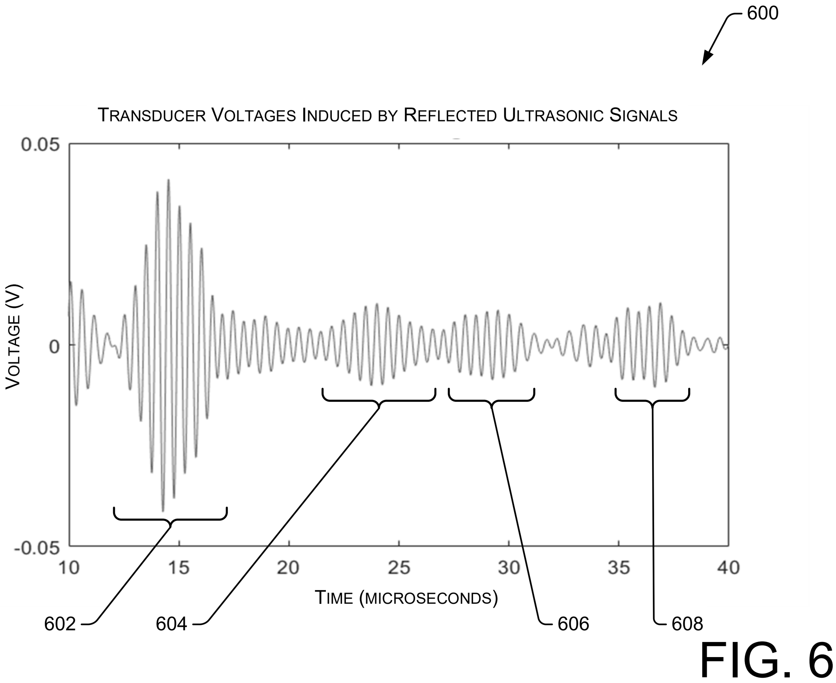

FIG. 6 shows an example timing diagram 600, including a sequence of voltage patterns generated by a transducer responsive to the return to the transducer of acoustic signals transiting the first path 500 and the second path 508 of FIG. 5. The voltage patterns are generated by the transducer, which may be a piezo electric device, and result from vibration of the device. That is, an electrical voltage pattern applied to the transducer 200 results in vibration, and thereby sound. And in reverse, an incoming ultrasonic signal vibrates the transducer, and thereby indues the generation of an electrical signal.

Voltage pattern 602 results when an ultrasonic signal sent by the transducer 200 reflects on reflector 406 and returns to the transducer. Upon return, the ultrasonic signal vibrates the transducer, thereby inducing the voltage pattern 602. Accordingly, an ultrasonic signal traversing path 508 results in the voltage pattern 602.

Voltage patterns 604, and 608 result from contact by "echo" acoustic signals with the transducer 200. That is, voltage patterns 604 and 608 are caused by second and third traversals of the path 508 (caused by the acoustic signal reflecting off the transducer), respectively. Accordingly, after contact with the transducer 200 resulting in the voltage pattern 602, the ultrasonic signal reflects off the transducer, and traverses a second lap of the path 508 (thereby contacting the transducer and creating voltage pattern 604). The ultrasonic signal again reflects off the transducer and traverses a third lap of the path 508 (thereby creating voltage pattern 608).

The voltage pattern 606 shows a voltage generated by the transducer 200 in response to contact with an ultrasonic signal that has traversed the path 500. That is, vibration of the transducer creates 200 an ultrasonic signal that is reflected by reflectors 402, 404, and returns to the transducer, thereby vibrating the transducer and inducing the voltage pattern 606.

FIG. 6 shows the voltage patterns 602 through 608 in a non-overlapping manner. Thus, a first distance between the transducer and the first reflector, a second distance between the first reflector and the second reflector, a third distance between the second reflector and the transducer, and a fourth distance between the transducer and the third reflector are selected to prevent simultaneous reception by the transducer of signals traversing the path and the second path. Accordingly, the distances between the transducer 200 and the reflectors 402, 404, and 406 are selected to result in clear reception of the voltage patterns 602 and 606. The distances may be selected to work over a range of speeds-of-sound based on an expected range of temperatures and an expected fluid (e.g., water or natural gas). Voltage pattern 602 is the first traversal by the ultrasonic signal of path 508. The time-of-flight of this signal is used to determine the speed-of-sound in the fluid. Voltage pattern 606 is the first traversal by the ultrasonic signal of path 500. The time-of-flight of this signal (together with the speed-of-sound) is used to determine the flowrate of the fluid.

**Example Flow Calculation**

In an example flow calculation, we look at a possible velocity requirement for segment 504, which travels through the slower-flowrate-region 214. We consider:

- $t_1$, the time of flight about the path 500, which includes the first segment 502, the second segment 504, and the third segment 506;
- $t_{502}$, $t_{504}$, $t_{506}$, the times of flight for each segment;
- $u_{504}$ and $u_{506}$, the flow velocity along segment 504 and segment 506;
- $L_{502}$, $L_{504}$, and $L_{506}$, the lengths of the first segment 502, the second segment 504, and the third segment 506; and
- $c$, the speed of sound in the fluid.

Using this, we have:

$$t_1 = t_l + t_m + t_n$$
$$t_1 = \frac{L_l}{c} + \frac{L_m}{c - u_m} + \frac{L_n}{c + u_n}$$

(Equation 1)

With no flow, all of the velocities are null, so we have:

$$t_1(Q = 0) = \frac{L_l}{c} + \frac{L_m}{c} + \frac{L_n}{c}$$

(Equation 2)

The difference between the time with flow and with no flow can be written as:

$$\Delta t = t_1 - t_1(Q = 0) = \left(\frac{L_m}{c - u_m} - \frac{L_m}{c}\right) + \left(\frac{L_n}{c + u_n} - \frac{L_n}{c}\right)$$

(Equation 3)

By developing the expression, we get:

$$\Delta t = L_m \frac{u_m}{c^2(1 - \frac{u_m}{c})} - L_n \frac{u_n}{c^2(1 + \frac{u_n}{c})}$$

(Equation 4)

Since the flow velocities are very small compared to the speed of sound, we can consider the speed ratios:

$$u/c \approx 0$$

(Equation 5)

As a result, we have:

$$\Delta t = \frac{1}{c^2}(L_m u_m - L_n u_n)$$

(Equation 6)

In case of poorly selected velocities with:

$$L_m u_m \approx L_n u_n,$$

(Equation 7)

the time of flight would not increase as the flow rate increases, as the two velocities compensate each other (e.g., cancel each other).

Accordingly, to have a good sensitivity and a significant time of flight increase, we should have:

$$u_m \ll u_n \frac{L_n}{L_m}$$

(Equation 8)

**Example Transformation of Time-of-Flight into Flowrate**

In an example calculation, we consider:

- $t_1$, $t_2$, the times-of-flight along the 500 path (which includes the first segment 502, the second segment 504, and the third segment 506), and the path of segment 508;
- $L$ and $H$, respectively, the total length of the path 500 and the height (e.g., vertical distance) of path 508;
- $u$, the average flow velocity measured along the path 500. A single value is considered here, to result in a simpler model compared to the previous section; and
- $c$, the speed of sound in the fluid.

We have:

$$\begin{cases} t_1 = \frac{L}{c+u} \\ t_2 = \frac{2.H}{c} \end{cases} \Rightarrow \begin{cases} c+u = \frac{L}{t_1} \\ c = \frac{2H}{t_2} \end{cases} \Rightarrow u = \frac{L}{t_1} - \frac{2H}{t_2}$$

(Equation 9)

As a result, we can determine the speed of sound using only $t_2$ and the average flow velocity along the ultrasonic path using $t_1$ and $t_2$. From the speed of sound, we can determine the temperature of the flow.

The flowrate $Q$ and the measured velocity $u$ are directly related and linked by a calibration factor $K$.

$$Q = K.u = K.\left(\frac{L}{t_1} - \frac{2H}{t_2}\right)$$

(Equation 10)

This factor $K$ can vary with he temperature and the flow velocity. It can take the form of an equation, a look-up table, or a combination of both. This factor can be determined by experimental measurements and/or flow simulations.

**Alternative Embodiment**

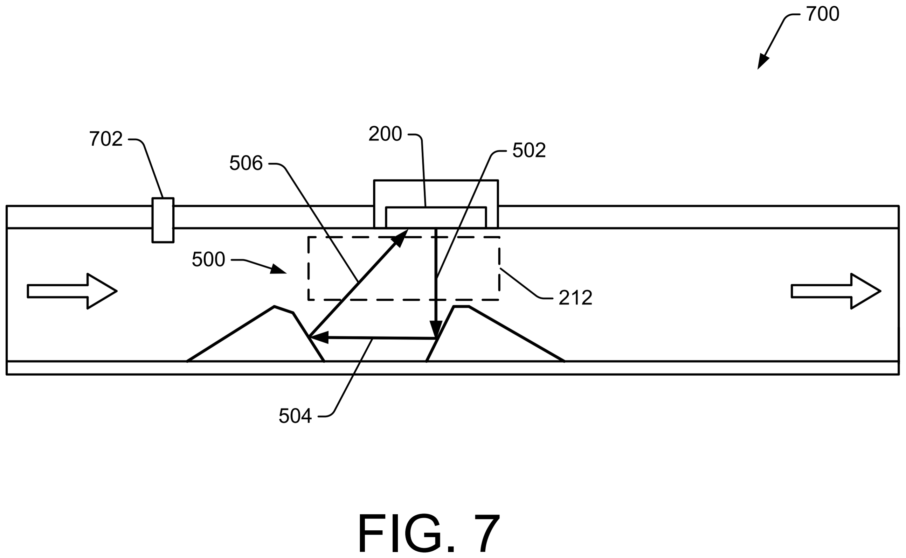

FIG. 7 shows an alternative embodiment 700 includes the path 500 traveled by an ultrasonic signal previously seen in FIG. 5. The example of FIG. 5 included a second path 508, generated by the transducer 200. A time-of-flight of the second path 508 was translated to the speed-of-sound in the fluid. The speed-of-sound was then used in the calculation of the flowrate of the fluid. In contrast, the alternative embodiment uses a temperature sensor 702 to measure the temperature of the fluid. Knowledge of the identity of the fluid (e.g., if the fluid is water, natural gas, or other fluid) and the temperature of that fluid can be used to determine the speed-of-sound of the fluid. Accordingly, the embodiment 700 provides an alternative technique, structure, and method of operation to determine the speed-of-sound, which is an input used to determine the flowrate of the fluid.

**Example Methods of Operation**

In some examples, the techniques discussed herein may be implemented by one or more processors accessing software defined on one or more memory devices. The processor(s) and memory device(s) may be located on a smart utility meter and/or a cloud-based server (e.g., a server of a utility company). If the functionality is distributed, portions of the software may reside on each of the smart utility meter and the server.

In other examples of the techniques discussed herein, the methods of operation may be performed by one or more application specific integrated circuits (ASIC) or may be performed by a general-purpose processor utilizing software (e.g., comprising computer-executable or processor-executable statements to perform actions) defined in computer readable media. In the examples and techniques discussed herein, the memory may comprise computer-readable media and may take the form of volatile memory, such as random-access memory (RAM) and/or non-volatile memory, such as read only memory (ROM) or flash RAM. Computer-readable or processor-readable media devices include volatile and non-volatile, removable, and non-removable media implemented in any method or technology for storage of information such as computer-readable instructions, data structures, program modules, or other data for execution by one or more processors of a computing device. Examples of computer-readable or processor-readable media include, but are not limited to, phase-change memory (PRAM), static random-access memory (SRAM), dynamic random-access memory (DRAM), other types of random access memory (RAM), read-only memory (ROM), electrically erasable programmable read-only memory (EEPROM), programmable read-only memory (PROM), flash memory or other memory technology, compact disk read-only memory (CD-ROM), digital versatile disks (DVD) or other optical storage, magnetic cassettes, magnetic tape, magnetic disk storage or other magnetic storage devices, or any other non-transitory medium that can be used to store information for access by a computing device.

As defined herein, computer-readable media includes non-transitory media. Computer-readable or processor-readable media does not include transitory media, such as modulated data signals and carrier waves, and/or other information-containing signals.

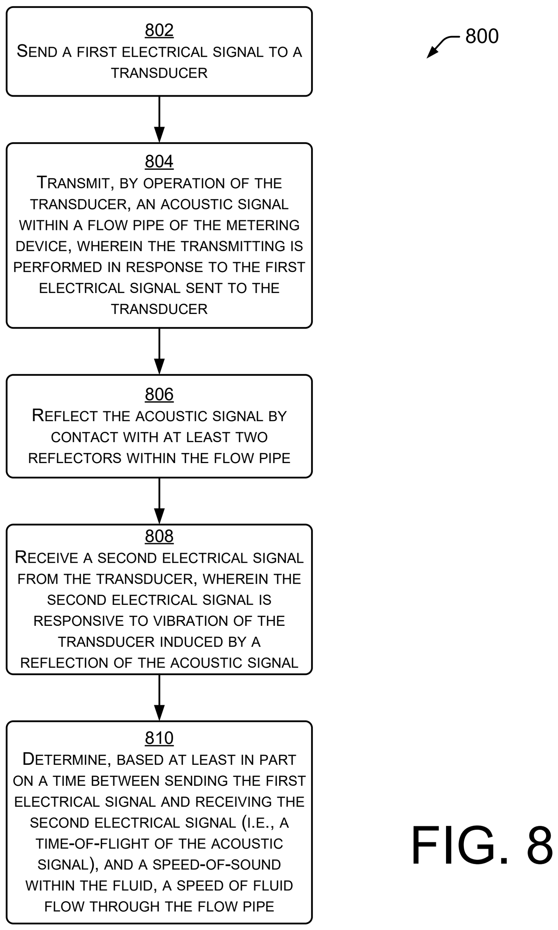

FIG. 8 shows example operation 800 of a fluid meter configured according to an example single transducer design. In the example, a transducer is stimulated by an electrical signal. The signal causes the transducer to vibrate, thereby causing an acoustic signal (i.e., sound waves) in a flow pipe of a fluid meter. The acoustic signal moves through the fluid flow in a triangular path due to reflection by first and second reflectors. The acoustic signal moves across the fluid flow, is reflected to travel against the fluid flow, and is again reflected to travel with the fluid flow, thereby returning to the transducer. In an example, when the acoustic signal move against the fluid flow (i.e., upstream) it moves through a slower-flowrate-region 214, wherein the fluid flow is slower, due to "flow-shapers" or fluid diverters. In the example, when the acoustic signal moves with the fluid flow (i.e., downstream) it moves through a faster-flowrate-region 212. Upon returning to the transducer, the acoustic signal vibrates the transducer, inducing an electrical signal. A time-of-flight of the acoustic signal is based on the time between the first electrical signal sent to the transducer, and the second electrical signal received from the transducer. The time-of-flight is based in part on the flowrate of fluid moving in the flow pipe of the flow meter. In the orientation of the path 500 of the acoustic signal seen in FIGS. 5 and 7, a faster fluid flow results in a shorter time-of-flight. The time-of-flight, together with the speed-of-sound in the fluid (or the fluid temperature) can be used to calculate the flowrate of the fluid. The flowrate of the fluid (which will likely vary over time) can be used to calculate a fluid volume and/or fluid consumption of a customer.

At block 802, a first electrical signal is sent to a transducer. The first electrical signal causes the transducer to vibrate, which results in an acoustic signal that travels in fluid in the flow pipe of the fluid meter (e.g., as seen in FIG. 5). The signal may be sent by the processor 110 or other device, and may be sent responsive to instructions resulting from execution of software statements in the system 118 to operate a signal transducer flow meter.

At block 804, an acoustic signal is transmitted-by operation of the transducer-within a flow pipe of the metering device. The transmitting is performed in response to the first electrical signal sent (at block 802) to the transducer.

At block 806, the acoustic signal is reflected by contact with two reflectors within the flow pipe. Referring to the example of FIG. 4, the reflectors 402, 404 reflect the acoustic signal (as seen in FIG. 5) to follow a triangular path beginning and ending at the transducer.

At block 808, a second electrical signal is received from the transducer. In an example, the second electrical signal is responsive to vibration of the transducer induced by a reflection of the acoustic signal. That is, the transducer (e.g., a piezo device) has the characteristics that an electrical signal can cause vibration, and vibration of the transducer can generate an electrical signal. In one example, the second electrical signal-generated by vibration of the transducer-is received by the processor (or other hardware device), according to the operation of software of the system 118.

At block 810, a speed of fluid flow (the flowrate) through the flow pipe is determined or calculated. The calculation may be based at least in part on: a time between sending the first electrical signal and receiving the second electrical signal (i.e., a time-of-flight of the acoustic signal); and a speed-of-sound within the fluid. In an alternative to measurement of the speed-of-sound (as shown in FIG. 7), the temperature of the fluid may be used in the calculation. Measurements and calculations of the flowrate can be used over time to calculate the quantity of fluid (e.g., water, natural gas, or other fluid) passing through the fluid meter.

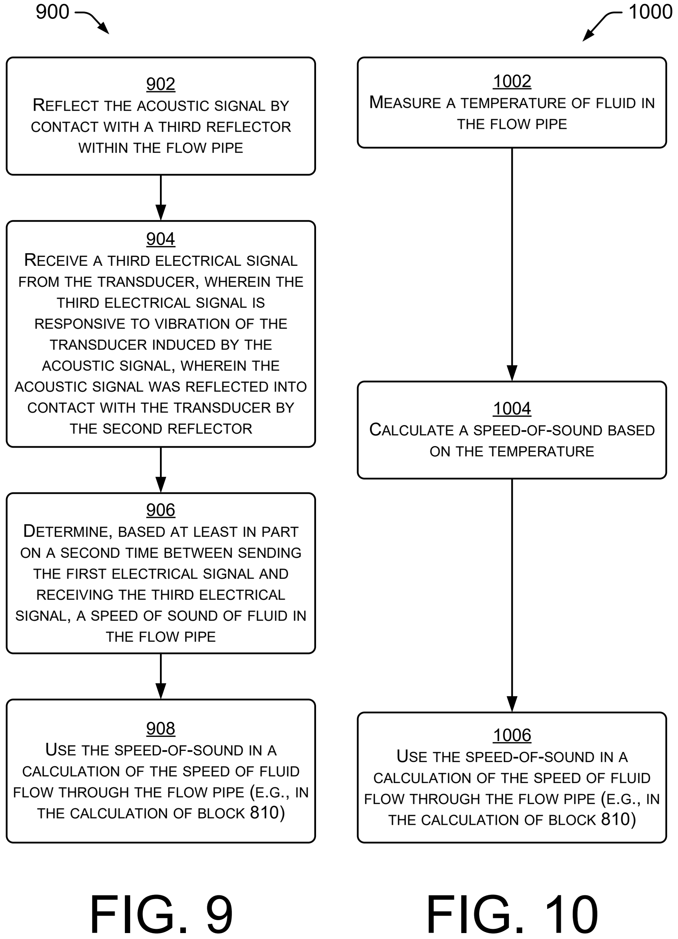

FIG. 9 shows a first example 900 by which a speed-of-sound value may be obtained. The speed-of-sound may be used in calculations for determining a flowrate of fluid in the fluid meter. The speed-of-sound value, together with the time-of-flight (e.g., of path 500 of FIG. 5) can be used to determine the fluid flowrate. At block 902, the acoustic signal is reflected by contact with a third reflector within the flow pipe. In the example of FIG. 5, an acoustic signal following path 508 reflects off the third reflector 406 (seen in FIG. 4), thereby returning to the transducer 200. At block 904, a third electrical signal is received from the transducer. In an example, the third electrical signal is responsive to vibration of the transducer induced by the acoustic signal, wherein the acoustic signal was reflected into contact with the transducer by the second reflector. At block 906, it is determined, based at least in part on a second time between sending the first electrical signal and receiving the third electrical signal, a speed-of-sound of fluid in the flow pipe. The distances between the transducer and reflector are known, as well as the time-of-flight along path 508 of FIG. 5. Accordingly, the calculation of speed-of-sound is made using the distance traveled and the time of travel. At block 908, the speed of fluid flow through the flow pipe is additionally based on the speed-of-sound. Accordingly, FIG. 9 provides a first means to obtain the speed-of-sound used by one version of the calculation of block 810. A second version of the calculation of block 810 uses the temperature of the fluid, according to the techniques of FIG. 10.

FIG. 10 shows an example 1000 describing the use of a temperature value in a calculation to determine a flowrate of fluid in the fluid meter. Accordingly, temperature and a knowledge of the fluid type (e.g., water or natural gas) can be used as an alternative to an actual measured speed-of-sound (e.g., as seen performed by the techniques of FIG. 9). At block 1002, a temperature of fluid in the flow pipe is measured. In the example of FIG. 7, the sensor 702 measures fluid temperature. Accordingly, processing data from the acoustic signal traversing path 508 is not required. At block 1004, a speed-of-sound is calculated based on the measured temperature. At block 1006, the speed of fluid flow through the flow pipe is additionally based on the speed-of-sound. Accordingly, FIG. 10 provides a second means (FIG. 9 showed a first means) to obtain the speed-of-sound used by the calculation of block 810.

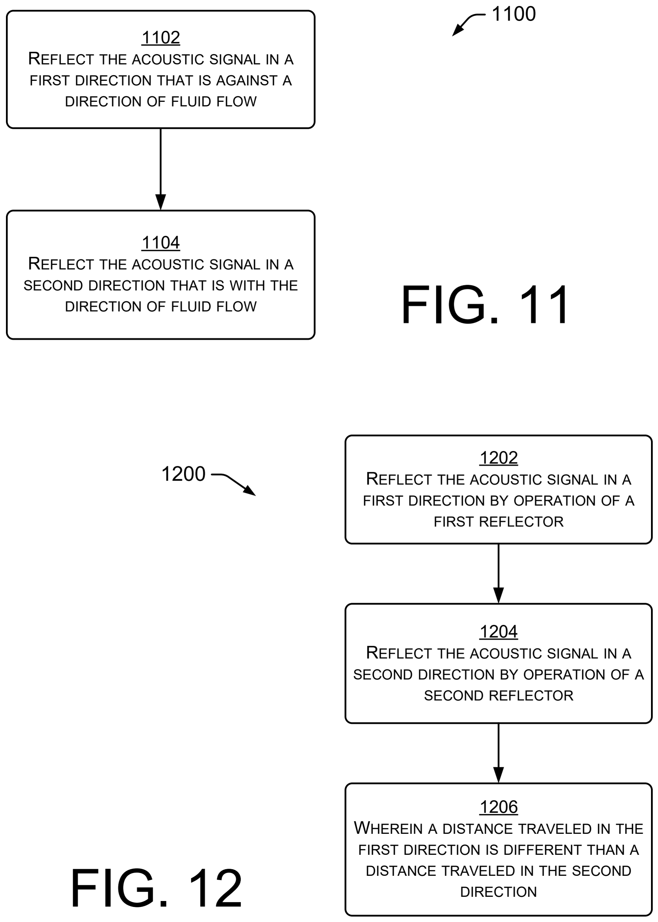

FIG. 11 shows a first example 1100 of guidance of an acoustic signal through a flow pipe of a fluid meter. At block 1102, the acoustic signal is reflected in a first direction that is against a direction of fluid flow. As seen in the example of FIGS. 4 and 5, the reflector 402 reflects the first segment 502 of the acoustic signal, thereby creating the second segment 504 of the acoustic signal. At block 1104, the acoustic signal is reflected a second time in a direction that is diagonal to a direction of fluid flow. As seen in the example of FIGS. 4 and 5, the reflector 404 reflects second segment 504, thereby creating a third segment 506, which returns to the transducer.

FIG. 12 shows a second example 1200 of guidance of an acoustic signal through a flow pipe of the fluid meter. At block 1202, the acoustic signal is reflected in a first direction by operation of a first reflector. As seen in the example of FIGS. 4 and 5, the reflector 402 reflects the first segment 502 of the acoustic signal, thereby creating a second segment 504. At block 1204, the acoustic signal is reflected in a second direction by operation of a second reflector. As seen in the example of FIGS. 4 and 5, the reflector 404 reflects the second segment 504 of the acoustic signal, thereby creating a third segment 506 of the acoustic signal. At block 1206, a distance traveled in the first direction is different than a distance traveled in the second direction. Referring to FIG. 5, the distance of the third segment 506 is greater than the distance of the second segment 504.

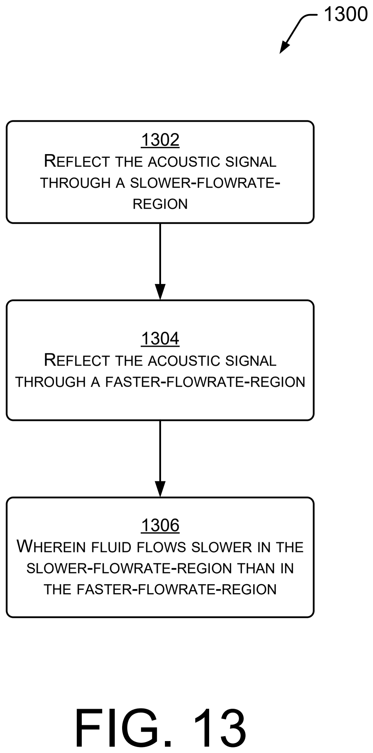

FIG. 13 shows a third example 1300 of guidance of an acoustic signal through a flow pipe of the fluid meter. At block 1302, the acoustic signal is reflected (e.g., by reflector 402) through a slower-flowrate-region. Referring to FIG. 2, the slower-flowrate-region 214 is located between the two flow-shapers 206, 208. At block 1304, the acoustic signal is reflected (e.g., by reflector 404) through a faster-flowrate-region. Referring to FIG. 2, the faster-flowrate-region 212 is located above the two flow-shapers 206, 208. At block 1306 and as discussed with respect to FIG. 2, fluid flows slower in the slower-flowrate-region than in the faster-flowrate-region due to the action of the flow-shapers 206, 208.

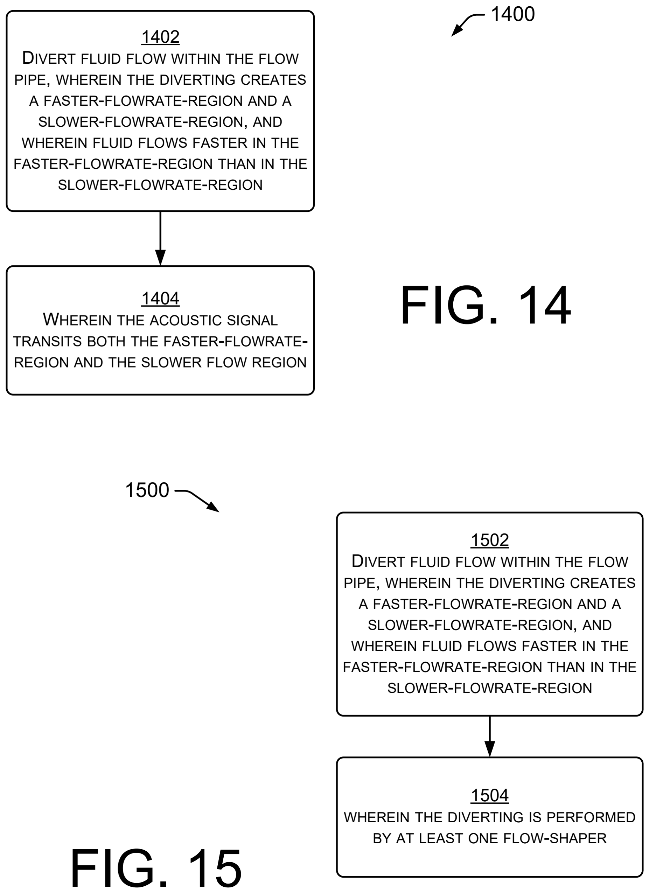

FIG. 14 shows a first example operation 1400 of one or more flow-shapers to divert fluid flow within the flow pipe of the fluid meter. At block 1402, fluid flow is diverted within the flow pipe. In an example, the diverting creates a faster-flowrate-region and a slower-flowrate-region, and wherein fluid flows faster in the faster-flowrate-region than in the slower-flowrate-region. In the example of FIG. 2, the flow-shapers 206, 208 divert the flow of fluid, thereby creating the faster-flowrate-region and a slower-flowrate-region. At block 1404, the acoustic signal transits both the faster-flowrate-region and the slower flow region.

FIG. 15 shows a second example operation 1500 of one or more flow-shapers to divert fluid flow within the flow pipe of the fluid meter. At block 1502, fluid flow within the flow pipe is diverted, to thereby create a faster-flowrate-region and a slower-flowrate-region. FIG. 2 shows an example of the faster-flowrate-region 212 and a slower-flowrate-region 214. The fluid flows faster in the faster-flowrate-region 212 than in the slower-flowrate-region 214 due to the interaction of the flow-shapers 206, 208 and the fluid flow. At block 1504, the diverting is performed by at least one flow-shaper. Referring to the example of FIG. 2, the flow-shapers 206, 208 create the faster-flowrate-region 212 and the slower-flowrate-region 214.

**Example Systems, Devices, and Methods**

The following examples of a single transducer flow meter are expressed as numbered clauses. While the examples illustrate a number of possible configurations and techniques, they are not meant to be an exhaustive or limiting listing of the systems, methods, and/or techniques described herein.

1. A method of operating a metering device, comprising: sending a first electrical signal to a transducer; transmitting, by operation of the transducer, an acoustic signal within a flow pipe of the metering device, wherein the transmitting is performed in response to the first electrical signal sent to the transducer; reflecting the acoustic signal by contact with a first reflector and a second reflector within the flow pipe; receiving a second electrical signal from the transducer, wherein the second electrical signal is responsive to vibration of the transducer induced by a reflection of the acoustic signal; and determining, based at least in part on a time between sending the first electrical signal and receiving the second electrical signal, a speed of fluid flow through the flow pipe.

2. The method of operating the metering device of clause 1, additionally comprising: reflecting the acoustic signal by contact with a third reflector within the flow pipe; receiving a third electrical signal from the transducer, wherein the third electrical signal is responsive to vibration of the transducer induced by the acoustic signal, wherein the acoustic signal was reflected into contact with the transducer by the second reflector; and determining, based at least in part on a second time between sending the first electrical signal and receiving the third electrical signal, a speed-of-sound of fluid in the flow pipe; wherein determining the speed of fluid flow through the flow pipe is additionally based on the speed-of-sound.

3. The method of operating the metering device of clause 1, additionally comprising: measuring a temperature of fluid in the flow pipe; and calculating a speed-of-sound based on the temperature; wherein determining the speed of fluid flow through the flow pipe is additionally based on the speed-of-sound.

4. The method of operating the metering device of clause 1, wherein reflecting the acoustic signal comprises: reflecting the acoustic signal in a first direction that is against a direction of fluid flow; and reflecting the acoustic signal in a second direction that is with the direction of fluid flow.

5. The method of operating the metering device of clause 1, wherein reflecting the acoustic signal comprises: reflecting the acoustic signal in a first direction by operation of a first reflector; and reflecting the acoustic signal in a second direction by operation of a second reflector, wherein a distance traveled in the first direction is different than a distance traveled in the second direction.

6. The method of operating the metering device of clause 1, wherein reflecting the acoustic signal by contact with the first reflector and the second reflector within the flow pipe comprises: reflecting the acoustic signal through a slower-flowrate-region; and reflecting the acoustic signal through a faster-flowrate-region, wherein fluid flows slower in the slower-flowrate-region than in the faster-flowrate-region.

7. The method of operating the metering device of clause 1, additionally comprising: diverting fluid flow within the flow pipe, wherein the diverting creates a faster-flowrate-region and a slower-flowrate-region, and wherein fluid flows faster in the faster-flowrate-region than in the slower-flowrate-region, wherein the acoustic signal transits both the faster-flowrate-region and the slower-flowrate-region.

8. The method of operating the metering device of clause 1, additionally comprising: diverting fluid flow within the flow pipe, wherein the diverting creates a faster-flowrate-region and a slower-flowrate-region, wherein fluid flows faster in the faster-flowrate-region than in the slower-flowrate-region, wherein the diverting is performed by at least one flow-shaper.

The method of operating the metering device of clause 1, additionally comprising one or more of, or any combination of, or all of, any of the preceding clauses.

9. A metering device, comprising: a flow pipe; a transducer, attached to the flow pipe, and configured to send an acoustic signal; a first reflector, positioned to reflect the acoustic signal; a second reflector, positioned to receive the acoustic signal reflected by the first reflector, and positioned to reflect the acoustic signal to the transducer; a processor; one or more memory devices in communication with the processor; and statements, defined in the one or more memory devices, which when executed by the processor configure the metering device to perform actions comprising: determining a time-of-flight of the acoustic signal to transit a path, wherein the acoustic signal is reflected by the first reflector and the second reflector; and determining, based at least in part on the time-of-flight of the acoustic signal, a flowrate of fluid flowing through the flow pipe.

10. The metering device as recited in clause 9, additionally comprising: a flow-shaper, contained within the flow pipe, to create a faster-flowrate-region and a slower-flowrate-region, and wherein fluid flows faster in the faster-flowrate-region than in the slower-flowrate-region.

11. The metering device as recited in clause 9, additionally comprising: a third reflector positioned to reflect the acoustic signal back to the transducer, wherein the statements configure the metering device to perform additional actions comprising: determining a second time-of-flight of the acoustic signal from the transducer to the third reflector, and back to the transducer; and determining a speed-of-sound of the acoustic signal based on the second time-of-flight; wherein determining the flowrate is additionally based on the speed-of-sound.

12. The metering device as recited in clause 9, additionally comprising: a temperature sensor to measure a temperature of fluid in the flow pipe; wherein the statements configure the metering device to perform additional actions comprising: measuring a temperature of fluid in the flow pipe using the temperature sensor; and calculating a speed-of-sound based on the temperature; wherein determining the flowrate is additionally based on the speed-of-sound.

13. The metering device as recited in clause 9, additionally comprising: a third reflector positioned to reflect the acoustic signal back to the transducer along a second path; wherein a first distance between the transducer and the first reflector, a second distance between the first reflector and the second reflector, a third distance between the second reflector and the transducer, and a fourth distance between the transducer and the third reflector are selected to prevent simultaneous reception by the transducer of signals traversing the path and the second path.

14. The metering device as recited in clause 9, additionally comprising: a flow-shaper to create a first region within the flow pipe and a second region within the flow pipe, wherein when fluid is flowing within the flow pipe, fluid is flowing faster in the first region than in the second region based at least in part on the flow-shaper.

15. The metering device as recited in clause 14, additionally comprising: a second flow-shaper, wherein the second flow-shaper is downstream from the flow-shaper, wherein the second region is located between the flow-shaper and the second flow-shaper; and wherein a first portion of the path (e.g., parts of segments 502 and 506) is contained within the first region (e.g., faster-flowrate-region 212) and a second portion of the path (e.g., segment 504, and parts of segment 502 and segment 506) is contained within the second region (e.g., slower-flowrate-region 214).

16. The metering device as recited in clause 14, wherein the first reflector (e.g., reflector 402) guides the acoustic signal to travel within the second region (e.g., slower-flowrate-region 214).

17. The metering device as recited in clause 14, wherein: the second reflector (e.g., reflector 404) reflects the acoustic signal through a first region (e.g., faster-flowrate-region 212).

The metering device as recited in clause 14, additionally comprising one or more of, or any combination of, or all of, any of the preceding clauses.

18. One or more non-transitory computer-readable media storing computer-executable instructions that, when executed by one or more processors, configure a metering device to perform actions comprising: sending a first electrical signal to a transducer; transmitting, by operation of the transducer, an acoustic signal within a flow pipe of the metering device, wherein the transmitting is performed in response to the first electrical signal sent to the transducer; reflecting the acoustic signal by contact with a first reflector and a second reflector within the flow pipe; receiving a second electrical signal from the transducer, wherein the second electrical signal is responsive to vibration of the transducer induced by a reflection of the acoustic signal; and determining, based at least in part on a time between sending the first electrical signal and receiving the second electrical signal, a speed of fluid flow through the flow pipe.

19. One or more computer-readable media as recited in clause 18, wherein the actions additionally comprise: reflecting the acoustic signal by contact with a third reflector within the flow pipe; receiving a third electrical signal from the transducer, wherein the third electrical signal is responsive to vibration of the transducer induced by the acoustic signal, wherein the acoustic signal was reflected into contact with the transducer by the second reflector; and determining, based at least in part on a second time between sending the first electrical signal and receiving the third electrical signal, a speed-of-sound of fluid in the flow pipe; wherein determining the speed of fluid flow through the flow pipe is additionally based on the speed-of-sound.

20. One or more computer-readable media as recited in clause 18, wherein the actions additionally comprise: measuring a temperature of fluid in the flow pipe; and calculating a speed-of-sound based on the temperature; wherein determining the speed of fluid flow through the flow pipe is additionally based on the speed-of-sound.

One or more computer-readable media as recited in clause 18, additionally comprising one or more of, or any combination of, or all of, any of the preceding clauses.

## Conclusion

Although the subject matter has been described in language specific to structural features and/or methodological actions, it is to be understood that the subject matter defined in the appended claims is not necessarily limited to the specific features or actions described. Rather, the specific features and actions are disclosed as exemplary forms of implementing the claims.

The words comprise, comprises, and/or comprising, when used in this specification and/or claims do not preclude the presence or addition of one or more other features, devices, techniques, and/or components and/or groups thereof.

**Claims**

1. A method of operating a metering device, comprising:

   sending a first electrical signal to a transducer;
   transmitting, by operation of the transducer, an acoustic signal within a flow pipe of the metering device, wherein the transmitting is performed in response to the first electrical signal sent to the transducer;
   reflecting the acoustic signal by contact with a first reflector and a second reflector within the flow pipe;
   receiving a second electrical signal from the transducer, wherein the second electrical signal is responsive to vibration of the transducer induced by a reflection of the acoustic signal; and
   determining, based at least in part on a time between sending the first electrical signal and receiving the second electrical signal, a speed of fluid flow through the flow pipe.

2. The method of operating the metering device of claim 1, additionally comprising:

   reflecting the acoustic signal by contact with a third reflector within the flow pipe;
   receiving a third electrical signal from the transducer, wherein the third electrical signal is responsive to vibration of the transducer induced by the acoustic signal, wherein the acoustic signal was reflected into contact with the transducer by the second reflector; and
   determining, based at least in part on a second time between sending the first electrical signal and receiving the third electrical signal, a speed-of-sound of fluid in the flow pipe;
   wherein determining the speed of fluid flow through the flow pipe is additionally based on the speed-of-sound.

3. The method of operating the metering device of claim 1 or 2, additionally comprising:

   measuring a temperature of fluid in the flow pipe; and
   calculating a speed-of-sound based on the temperature;
   wherein determining the speed of fluid flow through the flow pipe is additionally based on the speed-of-sound.

4. The method of operating the metering device of any preceding claim, wherein reflecting the acoustic signal comprises:

   reflecting the acoustic signal in a first direction that is against a direction of fluid flow; and
   reflecting the acoustic signal in a second direction that is with the direction of fluid flow.

5. The method of operating the metering device of any preceding claim, wherein reflecting the acoustic signal comprises:

   reflecting the acoustic signal in a first direction by operation of a first reflector; and
   reflecting the acoustic signal in a second direction by operation of a second reflector,
   wherein a distance traveled in the first direction is different than a distance traveled in the second direction.

6. The method of operating the metering device of any preceding claim, wherein reflecting the acoustic signal by contact with the first reflector and the second reflector within the flow pipe comprises:

   reflecting the acoustic signal through a slower-flowrate-region; and
   reflecting the acoustic signal through a faster-flowrate-region,
   wherein fluid flows slower in the slower-flowrate-region than in the faster-flowrate-region.

7. The method of operating the metering device of any preceding claim, additionally comprising:

   diverting fluid flow within the flow pipe, wherein the diverting creates a faster-flowrate-region and a slower-flowrate-region, and wherein fluid flows faster in the faster-flowrate-region than in the slower-flowrate-region, wherein the acoustic signal transits both the faster-flowrate-region and the slower-flowrate-region; and/or.
   wherein the diverting is performed by at least one flow-shaper.

8. A metering device, comprising:

   a flow pipe;
   a transducer, attached to the flow pipe, and configured to send an acoustic signal;
   a first reflector, positioned to reflect the acoustic signal;
   a second reflector, positioned to receive the acoustic signal reflected by the first reflector, and positioned to reflect the acoustic signal to the transducer;
   a processor;
   one or more memory devices in communication with the processor; and
   statements, defined in the one or more memory devices, which when executed by the processor configure the metering device to perform actions comprising:

   determining a time-of-flight of the acoustic signal to transit a path, wherein the acoustic signal is reflected by the first reflector and the second reflector; and
   determining, based at least in part on the time-of-flight of the acoustic signal, a flowrate of fluid flowing through the flow pipe.

9. The metering device as recited in claim 8, additionally comprising:
   a flow-shaper, contained within the flow pipe, to create a faster-flowrate-region and a slower-flowrate-region, and wherein fluid flows faster in the faster-flowrate-region than in the slower-flowrate-region.

10. The metering device as recited in claim 8 or 9, additionally comprising:

    a third reflector positioned to reflect the acoustic signal back to the transducer,
    wherein the statements configure the metering device to perform additional actions comprising:

    determining a second time-of-flight of the acoustic signal from the transducer to the third reflector, and back to the transducer; and
    determining a speed-of-sound of the acoustic signal based on the second time-of-flight;

    wherein determining the flowrate is additionally based on the speed-of-sound.

11. The metering device as recited in any of claims 8 to 10, additionally comprising:

    a temperature sensor to measure a temperature of fluid in the flow pipe;
    wherein the statements configure the metering device to perform additional actions comprising:

    measuring a temperature of fluid in the flow pipe using the temperature sensor; and
    calculating a speed-of-sound based on the temperature;

    wherein determining the flowrate is additionally based on the speed-of-sound.

12. The metering device as recited in any of claims 8 to 11, additionally comprising:

    a third reflector positioned to reflect the acoustic signal back to the transducer along a second path;
    wherein a first distance between the transducer and the first reflector, a second distance between the first reflector and the second reflector, a third distance between the second reflector and the transducer, and a fourth distance between the transducer and the third reflector are selected to prevent simultaneous reception by the transducer of signals traversing the path and the second path.

13. The metering device as recited in any of claims 8 to 12, additionally comprising:

    a flow-shaper to create a first region within the flow pipe and a second region within the flow pipe,
    wherein when fluid is flowing within the flow pipe, fluid is flowing faster in the first region than in the second region based at least in part on the flow-shaper; and optionally the metering device additionally comprising:

    a second flow-shaper, wherein the second flow-shaper is downstream from the flow-shaper,
    wherein the second region is located between the flow-shaper and the second flow-shaper; and

wherein a first portion of the path is contained within the first region and a second portion of the path is contained within the second region.

14. The metering device as recited in claim 13, wherein the first reflector guides the acoustic signal to travel within the second region; and/or wherein: the second reflector reflects the acoustic signal through a first region.

15. One or more non-transitory computer-readable media storing computer-executable instructions that, when executed by one or more processors, configure a metering device to perform actions comprising the method of any of claims 1 to 7.

100

108

106

104

**102**

**110**
PROCESSOR

**112**
MEMORY DEVICE(S)

**114**
OPERATING
SYSTEM

**116**
APPLICATION(S)

**118**
SYSTEM TO
OPERATE A
SINGLE
TRANSDUCER
FLOW METER

**120**
SINGLE TRANSDUCER
METROLOGY DEVICE

**122**
TEMPERATURE SENSOR

**124**
RADIO

**126** BATTERY AND/OR
POWER SUPPLY

128

# FIG. 1

FIG. 2

FIG. 3

EP 4 772 844 A1

FIG. 4

FIG. 5

TRANSDUCER VOLTAGES INDUCED BY REFLECTED ULTRASONIC SIGNALS

FIG. 6

FIG. 7

**802**
SEND A FIRST ELECTRICAL SIGNAL TO A TRANSDUCER

**804**
TRANSMIT, BY OPERATION OF THE TRANSDUCER, AN ACOUSTIC SIGNAL WITHIN A FLOW PIPE OF THE METERING DEVICE, WHEREIN THE TRANSMITTING IS PERFORMED IN RESPONSE TO THE FIRST ELECTRICAL SIGNAL SENT TO THE TRANSDUCER

**806**
REFLECT THE ACOUSTIC SIGNAL BY CONTACT WITH AT LEAST TWO REFLECTORS WITHIN THE FLOW PIPE

**808**
RECEIVE A SECOND ELECTRICAL SIGNAL FROM THE TRANSDUCER, WHEREIN THE SECOND ELECTRICAL SIGNAL IS RESPONSIVE TO VIBRATION OF THE TRANSDUCER INDUCED BY A REFLECTION OF THE ACOUSTIC SIGNAL

**810**
DETERMINE, BASED AT LEAST IN PART ON A TIME BETWEEN SENDING THE FIRST ELECTRICAL SIGNAL AND RECEIVING THE SECOND ELECTRICAL SIGNAL (I.E., A TIME-OF-FLIGHT OF THE ACOUSTIC SIGNAL), AND A SPEED-OF-SOUND WITHIN THE FLUID, A SPEED OF FLUID FLOW THROUGH THE FLOW PIPE

800

FIG. 8

900

**902**
REFLECT THE ACOUSTIC SIGNAL BY CONTACT WITH A THIRD REFLECTOR WITHIN THE FLOW PIPE

↓

**904**
RECEIVE A THIRD ELECTRICAL SIGNAL FROM THE TRANSDUCER, WHEREIN THE THIRD ELECTRICAL SIGNAL IS RESPONSIVE TO VIBRATION OF THE TRANSDUCER INDUCED BY THE ACOUSTIC SIGNAL, WHEREIN THE ACOUSTIC SIGNAL WAS REFLECTED INTO CONTACT WITH THE TRANSDUCER BY THE SECOND REFLECTOR

↓

**906**
DETERMINE, BASED AT LEAST IN PART ON A SECOND TIME BETWEEN SENDING THE FIRST ELECTRICAL SIGNAL AND RECEIVING THE THIRD ELECTRICAL SIGNAL, A SPEED OF SOUND OF FLUID IN THE FLOW PIPE

↓

**908**
USE THE SPEED-OF-SOUND IN A CALCULATION OF THE SPEED OF FLUID FLOW THROUGH THE FLOW PIPE (E.G., IN THE CALCULATION OF BLOCK 810)

# FIG. 9

1000

**1002**
MEASURE A TEMPERATURE OF FLUID IN THE FLOW PIPE

↓

**1004**
CALCULATE A SPEED-OF-SOUND BASED ON THE TEMPERATURE

↓

**1006**
USE THE SPEED-OF-SOUND IN A CALCULATION OF THE SPEED OF FLUID FLOW THROUGH THE FLOW PIPE (E.G., IN THE CALCULATION OF BLOCK 810)

# FIG. 10

1100

**1102**
REFLECT THE ACOUSTIC SIGNAL IN A FIRST DIRECTION THAT IS AGAINST A DIRECTION OF FLUID FLOW

**1104**
REFLECT THE ACOUSTIC SIGNAL IN A SECOND DIRECTION THAT IS WITH THE DIRECTION OF FLUID FLOW

# FIG. 11

1200

**1202**
REFLECT THE ACOUSTIC SIGNAL IN A FIRST DIRECTION BY OPERATION OF A FIRST REFLECTOR

**1204**
REFLECT THE ACOUSTIC SIGNAL IN A SECOND DIRECTION BY OPERATION OF A SECOND REFLECTOR

**1206**
WHEREIN A DISTANCE TRAVELED IN THE FIRST DIRECTION IS DIFFERENT THAN A DISTANCE TRAVELED IN THE SECOND DIRECTION

# FIG. 12

1300

1302
REFLECT THE ACOUSTIC SIGNAL
THROUGH A SLOWER-FLOWRATE-
REGION

1304
REFLECT THE ACOUSTIC SIGNAL
THROUGH A FASTER-FLOWRATE-REGION

1306
WHEREIN FLUID FLOWS SLOWER IN THE
SLOWER-FLOWRATE-REGION THAN IN
THE FASTER-FLOWRATE-REGION

# FIG. 13

1400

**1402**
DIVERT FLUID FLOW WITHIN THE FLOW PIPE, WHEREIN THE DIVERTING CREATES A FASTER-FLOWRATE-REGION AND A SLOWER-FLOWRATE-REGION, AND WHEREIN FLUID FLOWS FASTER IN THE FASTER-FLOWRATE-REGION THAN IN THE SLOWER-FLOWRATE-REGION

**1404**
WHEREIN THE ACOUSTIC SIGNAL TRANSITS BOTH THE FASTER-FLOWRATE-REGION AND THE SLOWER FLOW REGION

# FIG. 14

1500

**1502**
DIVERT FLUID FLOW WITHIN THE FLOW PIPE, WHEREIN THE DIVERTING CREATES A FASTER-FLOWRATE-REGION AND A SLOWER-FLOWRATE-REGION, AND WHEREIN FLUID FLOWS FASTER IN THE FASTER-FLOWRATE-REGION THAN IN THE SLOWER-FLOWRATE-REGION

**1504**
WHEREIN THE DIVERTING IS PERFORMED BY AT LEAST ONE FLOW-SHAPER

# FIG. 15

Europäisches
Patentamt
European
Patent Office
Office européen
des brevets

# EUROPEAN SEARCH REPORT

**Application Number**

EP 25 21 6793

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 103 44 893 A1 (BOSCH GMBH ROBERT [DE]) 21 April 2005 (2005-04-21) | 1-5,7,8, 10,11,15 | INV. G01F1/667 |
| A | * paragraphs [0001], [0006] - [0011], [0022] - [0037]; figures 1-5 * | 6,9, 12-14 | G01F15/00 G01F1/66 |
| | ----- | | |
| X | US 2024/011810 A1 (FOWLER JEFFREY M [US] ET AL) 11 January 2024 (2024-01-11) | 1-5,7,8, 10,11,15 | |
| A | * paragraphs [0002], [0003], [0012] - [0051]; figures 1-6 * | 6,9, 12-14 | |
| | ----- | | |
| X | EP 0 845 661 A1 (SIEMENS AG [DE]) 3 June 1998 (1998-06-03) | 1-5,7,8, 10,11,15 | |
| A | * page 2, line 30 - page 3, line 49 * * page 4, line 1 - page 6, line 16; figures 1-5 * | 6,9, 12-14 | |
| | ----- | | |
| X | US 2011/132102 A1 (UEBERSCHLAG PIERRE [FR]) 9 June 2011 (2011-06-09) | 1-5,7,8, 10,11,15 | |
| A | * paragraphs [0001], [0059] - [0076]; figures 1-10 * | 6,9, 12-14 | |
| | ----- | | **TECHNICAL FIELDS SEARCHED (IPC)** |
| X | US 2015/020608 A1 (CHEVRIER MATTHIEU [DE] ET AL) 22 January 2015 (2015-01-22) | 1-5,7,8, 10,11,15 | G01F |
| A | * paragraphs [0002], [0025] - [0057]; figures 2, 6-15 * | 6,9, 12-14 | |
| | ----- | | |
| A | DE 20 2006 021163 U1 (FLOWTEC AG [CH]) 1 August 2013 (2013-08-01) * paragraphs [0025], [0045] - [0049]; figures 1, 2 * | 2,10 | |
| | ----- | | |
| A | EP 3 951 328 A1 (PANASONIC IP MAN CO LTD [JP]) 9 February 2022 (2022-02-09) * paragraphs [0029], [0045]; figure 8A * | 3,11 | |
| | ----- | | |
| X | DE 103 44 894 A1 (BOSCH GMBH ROBERT [DE]) 21 April 2005 (2005-04-21) | 1-5,7,8, 10,11,15 | |
| A | * paragraphs [0001], [0005] - [0008], [0013] - [0023]; figure 1 * | 6,9, 12-14 | |
| | ----- | | |

The present search report has been drawn up for all claims

| Place of search | Date of completion of the search | Examiner |
|---|---|---|
| The Hague | 4 May 2026 | Feldhoff, Roger |

EPO FORM 1503 03.82 (P04C01)

2

## ANNEX TO THE EUROPEAN SEARCH REPORT
## ON EUROPEAN PATENT APPLICATION NO.

EP 25 21 6793

This annex lists the patent family members relating to the patent documents cited in the above-mentioned European search report.
The members are as contained in the European Patent Office EDP file on
The European Patent Office is in no way liable for these particulars which are merely given for the purpose of information.

04-05-2026

| Patent document cited in search report | | Publication date | Patent family member(s) | | Publication date |
|---|---|---|---|---|---|
| DE 10344893 | A1 | 21-04-2005 | DE | 10344893 A1 | 21-04-2005 |
| | | | WO | 2005031369 A2 | 07-04-2005 |
| US 2024011810 | A1 | 11-01-2024 | CA | 3205445 A1 | 07-01-2024 |
| | | | US | 2024011810 A1 | 11-01-2024 |
| EP 0845661 | A1 | 03-06-1998 | DE | 19649437 C1 | 20-05-1998 |
| | | | EP | 0845661 A1 | 03-06-1998 |
| US 2011132102 | A1 | 09-06-2011 | DE | 102008002166 A1 | 10-12-2009 |
| | | | EP | 2283326 A1 | 16-02-2011 |
| | | | RU | 2010154163 A | 20-07-2012 |
| | | | US | 2011132102 A1 | 09-06-2011 |
| | | | WO | 2009147128 A1 | 10-12-2009 |
| US 2015020608 | A1 | 22-01-2015 | US | 2015020608 A1 | 22-01-2015 |
| | | | US | 2015022923 A1 | 22-01-2015 |
| | | | US | 2016169721 A1 | 16-06-2016 |
| DE 202006021163 | U1 | 01-08-2013 | NONE | | |
| EP 3951328 | A1 | 09-02-2022 | CN | 113383212 A | 10-09-2021 |
| | | | EP | 3951328 A1 | 09-02-2022 |
| | | | JP | 7203302 B2 | 13-01-2023 |
| | | | JP | 2020165760 A | 08-10-2020 |
| | | | US | 2022170770 A1 | 02-06-2022 |
| | | | WO | 2020203183 A1 | 08-10-2020 |
| DE 10344894 | A1 | 21-04-2005 | DE | 10344894 A1 | 21-04-2005 |
| | | | WO | 2005031370 A2 | 07-04-2005 |

EPO FORM P0459

For more details about this annex : see Official Journal of the European Patent Office, No. 12/82